## Europäisches Patentamt
## European Patent Office
## Office européen des brevets

(19)

(11) Veröffentlichungsnummer: **0 111 628**
**B1**

(12) **EUROPÄISCHE PATENTSCHRIFT**

(45) Veröffentlichungstag der Patentschrift:
12.08.87

(51) Int. Cl.⁴: **A 23 K 1/16**

(21) Anmeldenummer: **83108225.0**

(22) Anmeldetag: **20.08.83**

(54) Verwendung von wässrigen L-Lysin-Lösungen zur Supplementierung von Futtermitteln und industriell hergestellten Mischfuttern mit L-Lysin.

(30) Priorität: **18.11.82 DE 3242501**

(43) Veröffentlichungstag der Anmeldung:
**27.06.84 Patentblatt 84/26**

(45) Bekanntmachung des Hinweises auf die Patenterteilung:
**12.08.87 Patentblatt 87/33**

(84) Benannte Vertragsstaaten:
**AT BE CH DE FR GB IT LI NL**

(56) Entgegenhaltungen:
**DE-A-3 032 618**
**DE-C-2 357 119**

**Patent Abstracts of Japan, Band 5, no.184, 21.11.81
AJINOMOTO AMINO ACIDS, GENERAL
CATALOGUE PUBLISHED OCTOBER 1982
AUSFÜHRDOKUMENTE VON DER FIRMA
AJINOMOTO FÜR L-LYSIN LÖSUNGEN**

**Die Akte enthält technische Angaben, die nach
dem Eingang der Anmeldung eingereicht wurden
und die nicht in dieser Patentschrift enthalten sind.**

(73) Patentinhaber: **Degussa Aktiengesellschaft,
Weissfrauenstrasse 9, D-6000 Frankfurt am Main
1 (DE)**

(72) Erfinder: **Spindler, Manfred, Dr.Dipl.- Chem.,
Kurfürstenstrasse 24, D-6450 Hanau (DE)**
Erfinder: **Tanner, Herbert, Dr.Dipl.- Chem.,
Wildaustrasse 20, D-6450 Hanau 9 (DE)**

**0 111 628**

**Beschreibung**

Gegenstand der Erfindung ist die Verwendung von wässrigen L-Lysin-Lösungen mit einem L-Lysingehalt zwischen 30 und 80 Gewichtsprozent zur Supplementierung von Futtermitteln und industriell hergestellten Mischfuttern mit L-Lysin.

Industriell hergestellte Mischfutter dienen insbesondere zur Ernährung der verschiedenen landwirtschaftlichen Nutztiere, wie Geflügel, Schweine und Rinder, aber auch zur Ernährung von Haustieren. Das jeweilige Futter enthält in der Regel alle für die entsprechende Tierart notwendigen Nährstoffe in ausgewogener und ausreichender Menge. Es besteht aus verschiedenen Einzelfuttermitteln, z. B. Sojaschrot Mais, anderen Getreidearten, Mühlennachprodukten, wie Maiskleber oder Maisklebermehl, Fischmehl, Fleischmehl, Futterfett, Melasse, Futterkalk, Viehsalz, sowie aus weiteren Komponenten pflanzlichen, tierischen oder minderalischen Ursprungs. Zusätzlich enthalten Mischfutter Stoffe, die zur Verbesserung der ernährungsphysiologischen Wirksamkeit der Rationen zugesetzt werden. Hierzu zählen Aminosäuren, wie L-Lysin, sowie Mineralstoffe, Spurenelemente und Konservierungsmittel.

Die Zusammensetzung der Mischfutter ist je nach Angebot und Preis der Komponenten Änderungen unterworfen. Die Rezeptur mun jedoch immer so gestaltet werden, dan die Nährstoffgehalte dem jeweiligen Bedarf der Tiere entsprechen.

Die verschiedenen Einzelfuttermittel und Zusatzstoffe liegen zunächst als Einzelkomponenten vor. Je nach Beschaffenheit müssen sie, z. B. durch Reinigen, Trocknen, Vermahlen, Verschroten, vorbereitet werden. Haben die einzelnen Komponenten die notwendige Beschaffenheit, wird der eigentliche Mischvorgang in einer dafür geeigneten Mischanlage vorgenommen. Die einzelnen Mischpartien sind dabei je nach Größe der Anlage verschieden. Zur Erzielung einer homogenen Mischung ist eine genügende Mischgenauigkeit erforderlich. Für Komponenten, die im fertigen Mischfutter nur in geringer Konzentration vorliegen, wird unter Umständen die Herstellung einer entsprechend höher konzentrierten Vormischung unumgänglich. Fertige Mischfutter können in Mehlform oder auch als Pellets zum Einsatz kommen.

Schon seit langer Zeit wird die essentielle Aminosäure L-Lysin in erheblichem Umfang als Zusatzstoff in industriell hergestellten Mischfuttern für Geflügel, Schweine und andere Tiere verwendet. Dabei wird jedoch nicht die kristalline Aminosäure L-Lysin in reiner Form eingesetzt, da das L-Lysin in freier Form schwer zu kristallisieren ist, stark hygroskopische Eigenschaften zeigt, aus der Luft Kohlendioxid absorbiert, einen äußerst unangenehmen Geruch besitzt und zur Zersetzung neigt.

Es werden vielmehr Konzentrate eingesetzt, die neben dem durch Fermentation gebildeten L-Lysin noch die gesamte während des Fermentationsprozesses anfallende Biomasse oder zumindest einen Teil davon enthalten (DE-PS 23 57 119 oder DD-PS 139 205). Gegebenenfalls enthalten derartige Konzentrate außerdem noch mineralische Zusätze, wie Kalk, Magnesiumcarbonat, Siliciumdioxid oder Silikate (DS-OS 30 32 618). Der tatsächliche Gehalt solcher Konzentrate an L-Lysin ist demnach relativ gering.

Im allgemeinen wird daher zur Supplementierung von industriell hergestellten Mischfuttern mit L-Lysin das L-Lysin-Monohydrochlorid verwendet. Dieses Monohydrochlorid ist eine stabile, leicht zu kristallisierende Verbindung, die weder hygroskopisch ist, noch unangenehme Geruchseigenschaften hat. Insbesondere neigt L-Lysin-Monohydrochlorid nicht zur Zersetzung. Allerdings ist seine Herstellung mit zusätzlichem Material- und Verfahrensaufwand verbunden.

Die Verwendung des L-Lysin-Monohydrochlorids zur Supplementierung von Futtermitteln und Mischfuttern mit L-Lysin hat aber den Nachteil, dan gemeinsam mit dem Gehalt an L-Lysin auch der Gehalt an Chlorid im Mischfutter erhöht wird. Dies ist im allgemeinen nicht erwünscht. So empfiehlt beispielsweise der "National Research Council" für Geflügelfutter einen Gehalt von 0,08 % Chlorid bei einem Gehalt an Natrium von 0,15 % und an Kalium von 0,1 bis 0,2 % ("Nutrient Requirements of Poultry", Washington, D.C., 1977). Der Gehalt an Natrium, Kalium und Chlorid beeinflußt nicht nur das Säure-Base-Gleichgewicht. Die durch überhöhte Chloridgehalte hervorgerufene metabolische Azidosis führt zu einer Depression der Wachstumsrate und der Futteraufnahme [Poultry Sci. 60, 1468 (1981)], und beeinflußt auch den Vitamin D-Metabolismus und das Knochenwachstum.

Eine besondere Rolle spielt auch das Verhältnis von Lysin zu Chlorid. Gemäß Poultry Sci. 60, 1468 (1981) wird z. B. der Lysin-Arginin-Antagonismus, der insbesondere bei Rationen auftritt, die arm an Arginin sind, durch erhöhte Chloridgehalte verstärkt. Dies führt zu reduzierter Futteraufnahme und reduziertem Wachstum. In Fütterungsversuchen mit kristallinen Aminosäurediäten kann sogar der positive Effekt der Aminosäurezulage ganz verloren gehen, wenn die Aminosäuren als Hydrochloride eingesetzt werden und ein Chloridüberschuß resultiert [Proc. Nutr. Soc. 40, 285 (1981)]. Aus diesen Gründen ist eine chloridfreie Form des L-Lysins zur Supplementierung von Futtermitteln und Mischfuttern sehr erwünscht.

Es wurde nun gefunden, dan auch die Supplementierung von Futtermitteln und Mischfuttern mit dem in freier Form instabilen L-Lysin möglich ist, wenn wässrige Lösungen von L-Lysin zur Supplementierung verwendet werden. Überraschenderweise sind diese wässrigen Lösungen auch bei längerer Lagerung und selbst bei erhöhten Temperaturen stabil. Vergleichsversuche haben gezeigt, dan eine 70 %ige L-Lysin-Lösung in Wasser nach 6 Wochen Lagerzeit bei 50°C keinerlei Verfärbungen zeigt. Die Untersuchung auf eventuell gebildete Nebenprodukte verläuft negativ. Kristallisiertes L-Lysin hingegen zeigt im Gegensatz zum Verhalten des gelösten Produktes bei dieser Lagerung deutliche Verfärbungen. Analytische Untersuchungen bestätigen die Bildung von Nebenprodukten. Dieses Verhalten ist deswegen völlig überraschend, weil nach allgemeiner Erfahrung zur Zersetzung neigende Produkte in gelöster Form viel empfindlicher sind als in kristallisiertem

2

Zustand. Die wässrigen Lösungen des L-Lysins haben gegenüber dem kristallisierten L-Lysin-Monohydrochlorid zudem den Vorteil, daß sie leichter herstellbar sind, den Chloridgehalt des Mischfutters nicht erhöhen und auch in kleinen Mengen exakt dosiert werden können. Als flüssige Formulierung erfordern sie bei der Supplementierung von Mischfuttern mit L-Lysin nicht die Herstellung der sonst meist unumgänglichen, das Lysin in entsprechend höherer Konzentration enthaltenden Vormischungen. Sie können vielmehr direkt in der vorgesehenen Konzentration, z. B. durch Versprühen in eine Mischkammer, mit den bereits in der gewünschten Konzentration vorliegenden übrigen Komponenten des Mischfutters homogen vermischt werden.

Obwohl L-Lysin im allgemeinen nicht nur in Substanz, sondern auch in Futtermitteln und Mischfuttern als eine der Aminosäuren gilt, die bei Wärmebehandlung am ehesten geschädigt werden [Prog. Food Nutr. Sci. 5, 159 (1981)], ist das freie L-Lysin, in Form von wässrigen L-Lysin-Lösungen eingebracht, überraschenderweise auch in Futtermitteln und Mischfuttern stabil. Zersetzung und/oder Umsetzungen mit anderen Futterbestandteilen treten nicht auf. In Fütterungsversuchen zeigt sich, daß die wässrigen L-Lysin-Lösungen die gleiche Wirksamkeit aufweisen wie das L-Lysin-Monohydrochlorid, sofern sie in äquimolarer Menge eingesetzt werden.

Um die angestrebten Verbesserungen hinsichtlich Gewichtszunahme und Futterverwertung zu erhalten, müssen dem jeweiligen Mischfutter zur Ergänzung des natürlichen L-Lysingehaltes der Futterproteine unterschiedliche Mengen an L-Lysin zugesetzt werden. Bei der erfindungsgemäßen Verwendung von wässrigen Lösungen von L-Lysin liegt die Menge, je nach Konzentration des L-Lysins in der Lösung, im allgemeinen zwischen 0,01 und 5 Gewichtsprozent, bezogen auf das Gewicht des fertigen Mischfutters. Besonders geeignet sind dabei Lösungen, deren Gehalt an L-Lysin zwischen 30 und 80 Gewichtsprozent, vorzugsweise zwischen 50 und 70 Gewichtsprozent liegt. Solche Lösungen können im einfachsten Fall erhalten werden durch Auflösen von L-Lysin in entsprechenden Mengen Wasser. Einfacher und zweckmäßiger ist es selbstverständlich, bei der industriellen Herstellung von L-Lysin gleich auf wässrige Lösungen hinzuarbeiten, die das L-Lysin in der gewünschten Konzentration enthalten. Dies vereinfacht naturgemäß die Herstellung und erspart, insbesondere auch im Vergleich zur Herstellung von L-Lysin-Monohydrochlorid, Kosten.

Die Erfindung soll durch die nachfolgenden Beispiele näher erläutert werden:

**Beispiel 1:**

In einem Fütterungsversuch mit Mastgeflügel wurden in Bodenhaltung unter praxisnahen Bedingungen in 3 Gruppen insgesamt 900 Tiere der Rasse Shaver Starbro gefüttert. Die Verteilung der Küken auf die Gruppen erfolgte im Alter on 1 Tag nach Zufall. Die Versuchsdauer betrug 28 Tage. Um die Wirkung der Aminosäure L-Lysin zu untersuchen, erhielt eine Kontrollgruppe nur die folgende Grundration:

| Komponente | Anteil im Futter (Gewichtsteile) |
| --- | --- |
| Mais | 40,60 |
| Sojaschrot | 32,80 |
| Maisstärke | 17,00 |
| Futterfett | 5,30 |
| Calciumphosphat | 2,10 |
| Calciumcarbonat | 0,35 |
| Kochsalz | 0,25 |
| Methioninvormischung | 1,00 |
| Cholinchlorid | 0,10 |
| Spurenelemente | 0,10 |
| Coccidiostaticum | 0,10 |
| Vitaminvormischung | 0,10 |
| Antioxidans | 0,02 |
| Konservierungsmittel | 0,05 |

Für die Versuchsgruppe 1 wurden dieser Grundration noch 0,095 Gewichtsteile L-Lysin in Form von 0,12 Gewichtsteilen L-Lysin-Monohydrochlorid zugesetzt, für die Versuchsgruppe 2 0,095 Gewichtsteile L-Lysin in Form von 0,136 Gewichtsteilen einer wässrigen L-Lysin-Lösung mit einem Gehalt von 70 Gewichtsprozent.

In der nachfolgenden Tabelle 1 sind die Ergebnisse des Fütterungsversuchs unter den Kriterien Körpergewicht und Futterverwertung zusammengestellt:

## Tabelle 1

| Kriterium | Kontrollgruppe (ohne L-Lysinzulage) | Versuchsgruppe 1 (mit L-Lysin-Monohydrochlorid) | Versuchsgruppe 2 (mit L-Lysin in wässriger Lsg) |
|---|---|---|---|
| Durchschnittliches Körpergewicht der Tiere [g] | 971 | 1023 | 1027 |
| Durchschnittliche Futterverwertung [g Futter/g Körpergewichtszunahme] | 1,53 | 1,45 | 1,44 |

**Beispiel 2:**

In einem Fütterungsversuch mit Mastschweinen im Gewichtsabschnitt von 23 bis 45 kg Lebendgewicht wurden in 3 Gruppen jeweils 24 Tiere der Rasse "Landrasse" individuell gefüttert. Um die Wirkung der Aminosäure L-Lysin zu untersuchen, erhielt eine Kontrollgruppe nur die folgende Grundration:

| Komponente | Anteil im Futter (Gewichtsteile) |
|---|---|
| Mais | 84,00 |
| Sojaschrot | 12,00 |
| Fleischknochenmehl | 2,00 |
| Calciumphosphat | 0,60 |
| Calciumcarbonat | 0,60 |
| Spurenelemente | 0,50 |
| Vitaminvormischung | 0,10 |

Für die Versuchsgruppe 1 wurden dieser Grundration noch 0,14 Gewichtsteile L-Lysin in Form von 0,18 Gewichtsteilen L-Lysin-Monohydrochlorid zugesetzt, für die Versuchsgruppe 2 0,14 Gewichtsteile L-Lysin in Form von 0,28 Gewichtsteilen einer wässrigen L-Lysin-Lösung mit einem Gehalt von 50 Gewichtsprozent.

In der nachfolgenden Tabelle 2 sind die Ergebnisse des Fütterungsversuchs unter den Kriterien Gewichtszunahme und Futterverwertung zusammengestellt:

Tabelle 2

| Kriterium | Kontrollgruppe (ohne L-Lysinzulage) | Versuchsgruppe 1 (mit L-Lysin-Monohydrochlorid) | Versuchsgruppe 2 (mit L-Lysin in wässriger Lsg) |
|---|---|---|---|
| Durchschnittliche Körpergewichtszunahme pro Tier [g/Tag] | 628 | 765 | 763 |
| Durchschnittliche Futterverwertung [g Futter/g Körpergewichtszunahme] | 2,62 | 2,38 | 2,38 |

Die Fütterungsversuche belegen, daß L-Lysin, auf äquimolarer Basis in Form von wässrigen L-Lysin-Lösungen zu industriell hergestellten Futtermitteln oder Mischfuttern hinzugefügt, gleiche L-Lysinwirksamkeit wie L-Lysin-Monohydrochlorid zeigt. Insgesamt ergeben sich aber durch die Verwendung von wässrigen L-Lysin-Lösungen Vorteile.

**0 111 628**

**Patentansprüche**

Verwendung von wässrigen L-Lysin-Lösungen mit einem L-Lysingehalt zwischen 30 und 80 Gewichtsprozent zur Supplementierung von Futtermitteln und industriell hergestellten Mischfuttern mit L-Lysin.

**Claims**

Use of aqueous L-lysine solutions having an L-lysine content of between 30 and 80 % by weight for supplementing foodstuffs and industrially produced mixed foods with L-lysine.

**Revendications**

Utilisation de solutions aqueuses de L-lysine ayant une teneur en L-lysine comprise entre 30 et 80 % en poids, pour l'apport complémentaire de L-lysine à des aliments pour animaux et des aliments mixtes pour animaux, produits industriellement.